(19) Europäisches Patentamt
European Patent Office
Office européen des brevets

(11) EP 4 782 710 A1

(12) EUROPEAN PATENT APPLICATION

(43) Date of publication:
29.07.2026 Bulletin 2026/31

(21) Application number: 26152547.1

(22) Date of filing: 19.01.2026

(51) International Patent Classification (IPC):
F16C 19/02 (2006.01)    F16C 41/00 (2006.01)
F16C 19/06 (2006.01)    F16C 19/52 (2006.01)
H01R 4/48 (2006.01)    H01R 39/12 (2006.01)
H02K 11/40 (2016.01)

(52) Cooperative Patent Classification (CPC):
F16C 41/002; F16C 19/02; F16C 19/06;
F16C 19/52; H01R 39/12; H01R 39/46;
H02K 11/40; F16C 2380/26

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 22.01.2025 JP 2025009437

(71) Applicant: NSK-WARNER K.K.
Tokyo 141-8560 (JP)

(72) Inventors:
• SETOI, Mutsumi
Fukuroi-shi, Shizuoka, 437-8535 (JP)
• ISO, Kenichi
Fukuroi-shi, Shizuoka, 437-8535 (JP)
• LUAN, Wenjing
Fukuroi-shi, Shizuoka, 437-8535 (JP)

(74) Representative: Berggren Oy
P.O. Box 16
Fabianinkatu 21
00101 Helsinki (FI)

(54) **SHAFT GROUNDING MEMBER FOR ROLLING BEARING, AND ROLLING BEARING UNIT**

(57) A shaft grounding member (1A) for a rolling bearing, the shaft grounding member being mounted on a rolling bearing unit including the rolling bearing in which one bearing ring is a fixed ring and the other bearing ring is a rotating ring, the shaft grounding member includes: a spring plate including an annular portion (11A) and at least one elastic portion (13A) that extends continuously from the annular portion in a radial direction, the spring plate being made of a thin plate of a conductive material; and a soft conductive member (20) mounted on a surface of the elastic portion that faces the rotating ring or a rotating member to which the rotating ring is fitted. The soft conductive member contains a lubricant in advance, and is capable of abutting against at least a part of a surface of the rotating ring or at least a part of a surface of the rotating member.

FIG. 1A

FIG. 1B

EP 4 782 710 A1

**Description**

BACKGROUND

1. Field of the Invention

The present disclosure relates to a shaft grounding member for a rolling bearing that prevents occurrence of electrolytic corrosion or generation of electromagnetic noise of a rolling bearing in a rolling bearing unit, and the rolling bearing unit provided with the shaft grounding member for a rolling bearing.

2. Description of the Related Art

In recent years, there has been a progress in practical use of an electric vehicle in which an electric motor serving as a drive source is provided inside or in the vicinity of the wheels to drive the wheels. Such a drive motor is generally called an in-wheel motor. The general in-wheel motor has a structure in which a stator is fixed to a motor housing and a rotor is provided on the inner diameter side of the stator with a gap in the radial direction, and is a so-called inner rotor type motor. As a drive method for the in-wheel motor, a brushless DC motor driven by an inverter is often used in consideration of the performance and the control performance of the motor.

In the method of driving with the inverter, a potential difference occurs between the stator and the rotor due to the parasitic capacitance between the stator and the rotor. This potential difference generates a so-called shaft voltage and shaft current, and when this shaft current passes through the rolling bearing that supports the rotor, a phenomenon called "electrolytic corrosion" occurs that damages the rolling bearing.

Specifically, the current flows locally in the contact portion between the raceway surfaces of the outer ring and the inner ring of the rolling bearing and the rolling elements, and the raceway surface or the rolling surface is melted and becomes uneven. This not only roughens the rolling surface and the rolling element surface of the bearing, causing the noise and the vibration, but also affects the life of the bearing if excessive electrolytic corrosion occurs.

In order to prevent the electrolytic corrosion of the rolling bearing, a conductive member is sometimes used. For example, JP2011-135720A and JP2011-135722A propose a conductive member including a contact body that electrically conducts with the rotor of the motor, an elastic body that presses the contact body toward the rotor, and a storage portion that stores the contact body and the elastic body, in which the storage portion is provided in a motor housing and electrically connected to the motor stator via the motor housing.

JP2020-127257A proposes a grounding device in which the distal end portion of a broom-shaped conductive fiber is brought into contact with the outer peripheral surface of a rotating shaft.

Further, JP2002-146568A proposes an electrolytic corrosion prevention device in which an annular seat portion in contact with the end surface of a bearing outer ring is bent into a wave washer shape, an elastic conductor including a contact piece that is extended from the inner side of the annular seat portion and that is in contact with the vicinity of the end surface center portion of the rotating shaft is used, and the surface of the annular seat portion is pressed by the lid-shaped wall of a bearing housing and electrically conducted in the state in which the contact piece abuts against the vicinity of the end surface center portion of the rotating shaft fitted to the bearing inner ring, and in which the annular seat portion is overlapped with the end surface of the bearing outer ring fitted in the bearing housing.

Further, JPH04-8820U proposes that a rod-shaped conductive brush is accommodated in a support hole formed in either one of two bearing rings, the distal end of the conductive brush is biased toward the other bearing ring and is brought into sliding contact with the other bearing ring by the elastic member, and the two bearing rings are electrically conducted.

JP2017-060401A proposes that the distal end portion of a shaft grounding brush made of a carbon filament abuts against an extension shaft, a shaft voltage generated in the shaft is grounded and removed, and electrolytic corrosion generated in a bearing is prevented.

In the bearing, measures against electromagnetic noise generated by electromagnetic interference are required, and various devices for preventing the generation of electromagnetic noise have been proposed. For example, JP2024-130948A proposes that a rod-shaped carbon brush having conductivity is accommodated between an inner ring and a metal ring, and the distal end of the carbon brush attached to the metal ring is biased against the inner ring by a spring and brought into sliding contact with the inner ring, thereby imparting conductivity performance to the conductive bearing and allowing a current flowing through the conductive bearing to flow outside the system via the metal ring and the brush to remove electromagnetic noise.

JP2023-018214A proposes a conductive device capable of releasing electromagnetic noise by preventing the generation of an oil film formed between a conductive rubber lip mounted on a rotating shaft and a metal housing by a centrifugal force or controlling the oil film thickness. By preventing the generation of an oil film or reducing the oil film thickness, it is possible to reduce the electrical resistance of the oil film and release electromagnetic noise from the rotating shaft to the housing.

JP2022-139252A proposes that a rolling element having conductivity is rolled between an outer ring and an inner ring in a state in which an oil film is cut to secure a path for charges, and the impedance between the outer ring and the inner ring or the impedance of the entire bearing is significantly reduced to improve the electromagnetic noise prevention effect and the electrolytic corrosion prevention effect.

JP2000-244180A proposes an electromagnetic noise prevention device in which a metal case of an electric motor and a rotating shaft in the electric motor are electrically conducted by a conduction unit such as a sliding contact member, so that electromagnetic noise induced in the rotating shaft is released to a metal electric motor housing grounded to a vehicle body.

However, in the technique described in any piece of the related arts, the abrasion powder generated from the conductive member may contaminate the lubricant or the grease composition sealed for lubrication and may damage the raceway surface or the rolling surface. The mating member of the conductive member may be damaged and the abrasion powder may be generated.

Specifically, in JP2011-135720A and JP2011-135722A, the contact body, the elastic body, and the storage body are metal members and are brought into sliding contact with one another due to the vibration of the motor, and thus the metal powder is generated. It is necessary to provide the contact body, the elastic body, and the storage body in the motor housing, and a space therefor is also required.

In JP2020-127257A, the distal end portion of the broom-shaped conductive fiber is brought into contact with the outer peripheral surface of the rotating shaft. However, in order to increase the contact area between the distal end portion of the broom-shaped conductive fiber and the rotating shaft as compared to when the distal end portion of the broom-shaped conductive fiber and the rotating shaft are simply brought into contact, the broom-shaped conductive fiber is brought into contact with the outer peripheral surface of the rotating shaft in the state of being bent. That is, since the distal end portion of the broom-shaped conductive fiber is in contact with the outer peripheral surface of the rotating shaft with a relatively strong pressing force, the abrasion powder is generated. At the same time, the outer peripheral surface of the rotating shaft, which is the mating member of the broom-shaped conductive fiber, is also damaged.

In JP2002-146568A, both the elastic conductor and the rotating shaft are made of metal, and the metal powder is generated when the elastic conductor and the rotating shaft come into sliding contact. At the same time, the end surface of the rotating shaft, which is the mating member of the elastic conductor, is damaged.

In JPH04-8820U, since the distal end of the rod-shaped conductive brush is in contact with the other bearing ring in the biased state, the abrasion powder of the conductive brush is generated. At the same time, the other bearing ring, which is the mating member of the conductive brush, is also damaged. Further, it is necessary to form a support hole for accommodating the conductive brush and the elastic member on the bearing ring, and a large load is applied to the bearing ring.

In JP2017-060401A, since the distal end portion of the shaft grounding brush made of the carbon filament abuts against the extension shaft, the abrasion powder of the shaft grounding brush is generated. At the same time, the extension shaft, which is the mating member of the shaft grounding brush, is also damaged.

In the bearing disclosed in the related arts excepting JP2000-244180A, frictional heat may be generated due to sliding contact between the conductive member and the mating member during use, and thus the durability of the bearing is reduced. Since the peripheral speed of the rotating member has been improved with the recent improvement in performance of the motor, further prevention of the temperature rise is required.

In JP2000-244180A, a wear-resistant member is selected as the sliding contact member, but the effect of reducing wear is not sufficient.

SUMMARY

An object of the present disclosure is to provide a space-saving and inexpensive shaft grounding member and a rolling bearing unit provided with the shaft grounding member. Accordingly, in addition to preventing the generation of the abrasion powder from a conductive member or the abrasion powder accompanying sliding contact between the conductive member and a mating member and temperature rise due to sliding, and minimizing damage to the mating member, the shaft grounding member and the rolling bearing unit can be used with the existing bearing without requiring new processing on the bearing and without the restriction on the type of the bearing.

The above object of the present disclosure is achieved by the following configurations [1] to [14].

[1] A shaft grounding member for a rolling bearing, the shaft grounding member being mounted on a rolling bearing unit including the rolling bearing in which one bearing ring is a fixed ring and the other bearing ring is a rotating ring, the shaft grounding member including: a spring plate including an annular portion and at least one elastic portion that extends continuously from the annular portion in a radial direction, the spring plate being made of a thin plate of a conductive material; and a soft conductive member mounted on a surface of the elastic portion that faces the rotating ring or a rotating member to which the rotating ring is fitted, in which the soft conductive member contains a lubricant in advance, and is capable of abutting against at least a part of a surface of the rotating ring or at least a part of a surface of the rotating member.

[2] The shaft grounding member for a rolling bearing according to [1], in which the shaft grounding member is used in a dry environment, and the lubricant is non-volatile.

[3] The shaft grounding member for a rolling bearing according to [1], in which the soft conductive member is made of at least one selected from a resin-impregnated non-woven fabric, a non-woven fabric, a resin-impregnated woven fabric, a woven fabric, a resin-impregnated soft porous body, and a soft porous body.

[4] The shaft grounding member for a rolling bearing according to [1], in which the spring plate includes the annular portion and a plurality of the elastic portions extending continuously from the annular portion in a radial shape, in which the soft conductive member is mounted on a surface of the elastic portion facing the rotating ring, and in which the soft conductive member is capable of abutting against a side surface of the rotating ring.

[5] The shaft grounding member for a rolling bearing according to [1], in which the spring plate includes the annular portion and a plurality of the elastic portions extending in a radial shape continuously from the annular portion, in which the soft conductive member is mounted on a surface of the elastic portion facing the rotating member, and in which the soft conductive member is capable of abutting against a side surface of the rotating member.

[6] The shaft grounding member for a rolling bearing according to [1], in which the annular portion is pressed against a side surface of the fixed ring with a spacer interposed therebetween.

[7] The shaft grounding member for a rolling bearing according to [1], in which the spring plate includes the annular portion and a plurality of the elastic portions extending in a radial shape continuously from the annular portion, and in which the plurality of elastic portions are bent toward the rotating ring.

[8] The shaft grounding member for a rolling bearing according to [1], in which the spring plate includes the annular portion and a plurality of the elastic portions extending in a radial shape continuously from the annular portion, and in which the plurality of elastic portions are formed flush with the annular portion.

[9] A rolling bearing unit including: a rolling bearing in which one bearing ring is a fixed ring and the other bearing ring is a rotating ring; and the shaft grounding member for a rolling bearing according to any one of [1] to [8].

[10] The shaft grounding member for a rolling bearing according to [1], in which the rolling bearing is of an inner ring rotating type in which the fixed ring is an outer ring fixed to a housing and the rotating ring is an inner ring into which a shaft directly connected to a motor is fitted, in which the spring plate includes the annular portion and the elastic portion extending continuously from an inner peripheral side end portion of the annular portion to a center of the annular portion, in which the soft conductive member is mounted on a surface of the elastic portion on a side facing the rolling bearing, and in which the soft conductive member is capable of abutting against a side surface of the shaft.

[11] The shaft grounding member for a rolling bearing according to [10], in which the annular portion is pressed against a side surface of the outer ring with a spacer interposed therebetween.

[12] The shaft grounding member for a rolling bearing according to [10], in which the elastic portion of the spring plate is bent toward the side surface of the shaft.

[13] The shaft grounding member for a rolling bearing according to [10], in which the elastic portion of the spring plate is formed flush with the annular portion.

[14] A rolling bearing unit including: an inner ring rotating type rolling bearing in which an outer ring is fixed to a housing and in which a shaft directly connected to a motor is fitted to an inner ring; and the shaft grounding member for a rolling bearing according to any one of [10] to [13].

In the shaft grounding member according to the present disclosure, the soft conductive member containing a lubricant in advance is attached to the elastic portion of the spring plate and abuts against at least a part of the surface of the rotating ring or the rotating member. The biasing force of the soft conductive member to the rotating ring or the rotating member by the spring plate is not fairly large, and the abrasion powder is less likely to be generated. Since the soft conductive member is made of a soft material, there is little damage to the rotating ring which is a mating member, and since the soft conductive member contains a lubricant, frictional heat caused by sliding contact is also reduced.

The shaft grounding member for a rolling bearing and the rolling bearing unit can be used with the existing rolling bearing without requiring any processing on the rolling bearing and without the restriction on the type of the rolling bearing, and thus the versatility is fairly high. Further, the spring plate is a thin plate, and an increase in space for the bearing unit to be mounted can be minimized.

The bearing unit according to the present disclosure is provided with the shaft grounding member according to the present disclosure. Therefore, generation of the abrasion powder and damage to the mating member are prevented, reduction in durability due to generation of frictional heat can be prevented, and further, the bearing unit is highly versatile and does not require an increase in space.

BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:

FIGS. 1A to 1C show an example of a shaft grounding member according to a first embodiment of the present disclosure applied to an inner ring rotating type bearing unit, in which FIG. 1A is a plan view thereof, FIG. 1B is a cross-sectional view taken along a line A-A in FIG. 1A, and FIG. 1C is an enlarged view showing a bent portion between an annular portion and an elastic portion in FIG. 1B;

FIG. 2 is a cross-sectional view showing a state when the shaft grounding member shown in FIGS. 1A to 1C is attached to the bearing unit;

FIG. 3 is a cross-sectional view showing an example of the bearing unit in which the shaft grounding member shown in FIGS. 1A to 1C is incorporated;

FIGS. 4A and 4B show an example of a shaft grounding member according to a second embodiment of the present disclosure applied to a bearing unit on the rotation side of an outer ring, in which FIG. 4A is a plan view thereof, and FIG. 4B is a cross-sectional view taken along a line A-A in FIG. 4A;

FIG. 5 is a cross-sectional view showing a state when the shaft grounding member shown in FIGS. 4A and 4B is attached to the bearing unit;

FIG. 6 is a cross-sectional view showing an example of the bearing unit in which the shaft grounding member shown in FIGS. 4A and 4B is assembled;

FIG. 7 is a cross-sectional view showing an example of an inner ring rotating type bearing unit provided with a shaft grounding member according to a third embodiment of the present disclosure;

FIG. 8 is a cross-sectional view showing an example of an inner ring rotating type bearing unit provided with another shaft grounding member according to the third embodiment of the present disclosure;

FIG. 9 is a cross-sectional view showing an example of an outer ring rotating type bearing unit provided with a shaft grounding member according to a fourth embodiment of the present disclosure;

FIG. 10 is a cross-sectional view showing an example of an outer ring rotating type bearing unit provided with another shaft grounding member according to the fourth embodiment of the present disclosure;

FIGS. 11A to 11C show an example of a shaft grounding member according to a fifth embodiment of the present disclosure, in which FIG. 11A is a plan view thereof, FIG. 11B is a cross-sectional view taken along a line A-A in FIG. 11A, and FIG. 11C is an enlarged view showing a bent portion of an elastic portion in FIG. 11B;

FIG. 12 is a cross-sectional view showing a state when the shaft grounding member shown in FIGS. 11A to 11C is attached to the bearing unit;

FIG. 13 is a cross-sectional view showing an example of the bearing unit in which the shaft grounding member shown in FIGS. 11A to 11C is incorporated;

FIG. 14 is a cross-sectional view corresponding to FIG. 1B, showing a shaft grounding member according to a modification of the present disclosure;

FIG. 15 is a cross-sectional view corresponding to FIG. 4B, showing a shaft grounding member according to a modification of the present disclosure;

FIG. 16 is a cross-sectional view corresponding to FIG. 11B, showing a shaft grounding member according to a modification of the present disclosure;

FIG. 17 is a cross-sectional view showing an example of a bearing unit provided with the shaft grounding member shown in FIG. 14;

FIG. 18 is a cross-sectional view showing an example of a bearing unit provided with the shaft grounding member shown in FIG. 15;

FIG. 19 is a cross-sectional view showing an example of a bearing unit provided with the shaft grounding member shown in FIG. 16;

FIG. 20 is a schematic view showing an example of a device used for conductivity evaluation and temperature evaluation; and

FIGS. 21A and 21B are an example of a shaft grounding member used for conductivity evaluation and temperature evaluation, in which FIG. 21A is a plan view thereof, and FIG. 21B is a back view thereof.

DETAILED DESCRIPTION OF THE INVENTION

Hereinafter, embodiments of the present disclosure will be described in detail with reference to the drawings. The present disclosure is not limited to the embodiments to be described below, and can be implemented by being freely changed without departing from the gist of the present disclosure. Hereinafter, a "shaft grounding member for a rolling bearing" is simply referred to as a "shaft grounding member", and a "rolling bearing unit" is simply referred to as a "bearing unit".

First Embodiment: Shaft Grounding Member and Bearing Unit for Inner Ring Rotation

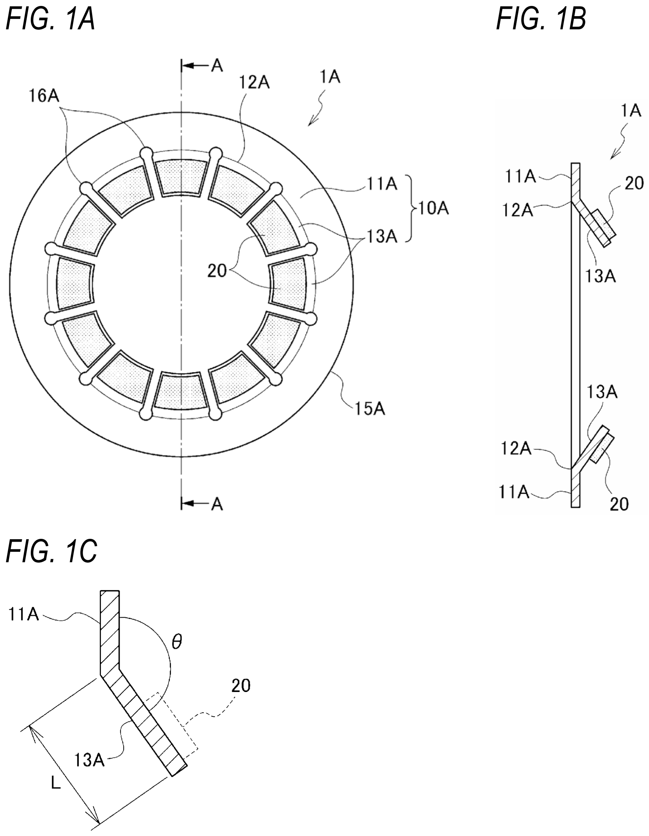

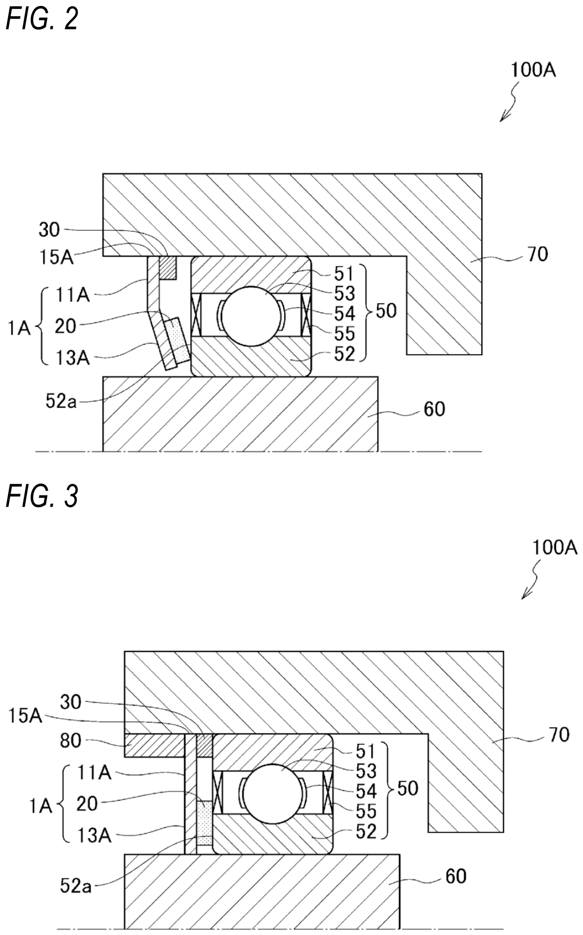

FIGS. 1A to 1C show an example of a shaft grounding member applied when a rotating ring is an inner ring, as a shaft grounding member according to the present disclosure. FIG. 1A is a plan view thereof, FIG. 1B is a cross-sectional view taken along a line A-A in FIG. 1A, and FIG. 1C is an enlarged view showing a bent portion between an annular portion and an elastic portion in FIG. 1B. FIG. 2 is a cross-sectional view showing a state when the shaft grounding member shown in FIGS. 1A to 1C is attached to the bearing unit. FIG. 3 is a cross-sectional view showing an example of the bearing unit in which the shaft grounding member shown in FIGS. 1A to 1C is incorporated.

As shown in FIGS. 1A and 1B, a shaft grounding member 1A for inner ring rotation includes a spring plate 10A including an annular portion 11A and a plurality of elastic portions 13A that are bent at an inner diameter side end portion 12A of the annular portion 11A and that extend continuously from the annular portion 11A toward the center in the radial direction in a radial shape. Further, notches 16A are formed on both sides of the bent portion of the elastic portion 13A with the annular portion 11A to maintain the bent state of the elastic portion 13A.

The spring plate 10A is entirely made of a thin plate made of a conductive material such as metal. When the conductive material is metal, stainless steel is preferable because stainless steel is easy to process and is less prone to rust.

A soft conductive member 20 is mounted on the surface of the bending side of each elastic portion 13A, and the spring plate 10A and the soft conductive member 20 constitute the shaft grounding member 1A. The soft conductive member 20 contains a lubricant in advance, and is attached to the elastic portion 13A using an adhesive or the like.

The soft conductive member and the lubricant will be described in detail later.

As shown in FIGS. 2 and 3, a bearing unit 100A according to a first embodiment includes a rolling bearing, and the shaft grounding member 1A shown in FIGS. 1A to 1C is mounted thereon. A rolling bearing 50 includes an outer ring 51 constituting one bearing ring, an inner ring 52 constituting the other bearing ring, and a plurality of rolling elements (balls) 53 rollably held between the outer ring 51 and the inner ring 52 by a retainer 54, and the rolling elements 53 are smoothly rolled by an in-bearing lubricant such as a lubricating oil or a grease composition. The in-bearing lubricant is sealed by a seal member 55. Here, the rotating ring is the inner ring 52, and a shaft 60 directly connected to a motor (not shown) is fitted into the inner diameter side of the inner ring 52. The outer ring 51 is a fixed ring and is fixed to a housing 70.

The soft conductive member 20 is mounted on the surface (the right side in the drawing) of the elastic portion 13A facing the inner ring (the rotating ring) 52, and is mounted on the bearing unit 100A in a state in which the surface on the bending side provided with the soft conductive member 20 faces the inner ring 52.

As shown in FIG. 3, the bearing unit 100A is used in a state in which the annular portion 11A of the shaft grounding member 1A is pressed against the side surface of the outer ring 51 by a conductive pressing member 80 with a conductive spacer 30 interposed therebetween. Therefore, the outer diameter side of the outer ring 51 and an outer peripheral end surface 15A of the annular portion 11A in the spring plate 10A are fixed in a state of abutting against the housing 70, and the soft conductive member 20 can abut against a side surface 52a of the inner ring 52. Since the spring plate 10A is made of a thin plate and has elasticity, by pressing the annular portion 11A of the shaft grounding member 1A against the outer ring 51 side, the elastic force due to the pressing acts on the elastic portion 13A, and the elastic portion 13A is pushed and expanded such that a bending angle θ shown in FIG. 1C increases. Accordingly, the portion of the soft conductive member 20 that is away from the side surface 52a of the inner ring 52 in FIG. 2 also moves toward the rolling bearing 50, and almost the entire soft conductive member 20 comes into contact with the side surface 52a of the inner ring 52.

The spacer 30 may have a thickness in consideration of the pressing amount of the spring plate 10A, the thickness of the soft conductive member 20, and the like. The annular portion 11A of the shaft grounding member 1A may directly abut against the side surface of the outer ring 51 without providing the spacer 30.

The soft conductive member 20 is obtained by mixing or supporting a conductive material in a soft base material, and as the soft base material, a porous body such as paper, cloth, or non-woven fabric, a resin sheet, or the like can be used. As the soft conductive member, a commercially available product called a "conductive sheet" or the like can also be used. Examples of the conductive material include metal fibers, pulverized products, and powders of silver, copper, gold, aluminum, stainless steel, and the like, or conductive carbon fibers, pulverized products, and powders. It is preferable that the soft conductive member is made of, among the materials, at least one selected from resin-impregnated non-woven fabrics, non-woven fabrics, resin-impregnated woven fabrics, woven fabrics, resin-impregnated soft porous bodies such as sponges, and soft porous bodies such as sponges.

The type of the lubricant contained in the soft conductive member 20 can be lubricating oil or grease, but is not particularly limited as long as the lubricant is non-volatile in the use environment of the soft conductive member 20, and a lubricant used in a normal bearing can be used. The lubricant contained in the soft conductive member 20 and the in-bearing lubricant may be the same as or different from each other. However, when the deteriorated bearing unit is disassembled, if different lubricants are mixed, processing becomes difficult, and thus it is preferable to use the same lubricant.

The viscosity of the lubricant is also not limited as long as the viscosity is within a range in which outflow from the soft conductive member 20 is prevented in a stationary state. This is because, in the first embodiment, since the soft conductive member 20 does not rotate and the outflow due to the centrifugal force does not occur, if the outflow is prevented in a stationary state, the soft conductive member 20 can withstand long-term use.

Specific examples of the lubricant include mineral oil, synthetic oil, grease containing mineral oil or synthetic oil and a thickener, and mixtures thereof. Examples of the mineral oil include paraffinic mineral oils and naphthenic mineral oils. Examples of the synthetic oil include hydrocarbon oils, aromatic oils, ester oils, and ether oils. Examples of the thickener include a urea compound and a metal soap.

The method for adding the lubricant to the soft conductive member 20 is not particularly limited, and for example, a method of applying the lubricant to the soft conductive member 20 or a method of impregnating the lubricant into the soft conductive member 20 can be selected.

In the inner ring rotating type bearing unit 100A in which the shaft grounding member is not incorporated, the current from the motor normally flows through the shaft 60 to the inner ring 52, and the rolling elements 53 and the outer ring 51 are energized inside the bearing, causing electrolytic corrosion in the rolling bearing 50. On the other hand, in the first embodiment, the soft conductive member 20 in the shaft grounding member 1A is mounted on the housing 70 so as to abut against the side surface 52a of the inner ring 52. The annular portion 11A of the spring plate 10A is electrically connected to the side surface of the outer ring 51 via the conductive spacer 30, and is also electrically connected to the conductive pressing member 80.

Accordingly, in the first embodiment, a current from a motor (not shown) that drives the shaft 60 flows to the inner ring 52. Thereafter, the current flows from the soft conductive member 20 to the elastic portion 13A and the annular portion 11A of the spring plate 10A through the inner ring 52, and flows to the grounded housing 70 via the outer peripheral end surface 15A of the annular portion 11A, the pressing member 80, the spacer 30, and the outer ring 51. In this way, the shaft 60 which is the rotating member and the housing 70 which is the fixing member are grounded, so that the inside of the bearing is not energized, and the shaft voltage which is the potential difference between the rotating member and the fixing member can be significantly reduced. Therefore, electrolytic corrosion of the rolling bearing 50 can be prevented, and electromagnetic noise can be reduced.

Since the outer ring 51 has a large contact area with the housing 70, the current flowing through the outer ring 51 does not pass through the rolling element 53 and flows into the housing 70.

Since the side surface 52a of the inner ring 52 is in contact with the soft conductive member 20, the side surface 52a of the inner ring 52 is not damaged, and the rotation torque of the inner ring 52 can be prevented from decreasing. Further, since the biasing force of the soft conductive member 20 to the side surface of the inner ring 52 by the spring plate 10A is not fairly large, and the soft conductive member 20 contains a lubricant, generation of the abrasion powder can be prevented.

The in-bearing lubricant filled around the rolling elements 53 is sealed by the seal member 55, and the soft conductive member 20 is assumed to be used in a dry environment in which a lubricating liquid such as oil does not flow. In the first embodiment, it is possible to prevent a temperature rise due to sliding between the soft conductive member 20 and a bearing 50 in a dry environment only by using the shaft grounding member 1A that includes the soft conductive member 20 containing a lubricant in advance, and it is possible to improve the durability of the shaft grounding member 1A.

When a porous body is selected as the soft conductive member 20 in the present embodiment, by controlling the pore structure of the porous body, the lubricant is contained therein by the surface tension of the lubricant. When the lubricant on the surface decreases, the lubricant inside moves to the surface due to capillary action. Accordingly, a lubricating film is always formed on the side surface of the inner ring 52 abutting against the soft conductive member 20, the generation of frictional heat is prevented, and the temperature rise due to sliding can be further reduced.

In the first embodiment, the outer peripheral end surface 15A of the annular portion 11A and the spacer 30 abut against the housing 70. Alternatively, the outer peripheral end surface 15A and the spacer 30 may be held between the outer ring 51 and the pressing member 80 without abutting against the housing 70. In this case, the current flowing through the annular portion 11A flows to the housing 70 via the outer ring 51 and the pressing member 80.

The annular portion 11A of the shaft grounding member 1A may be directly pressed against the side surface of the outer ring 51 with the conductive spacer 30 interposed therebetween without providing the pressing member 80, and may be fixed in a manner of abutting against the housing 70.

As shown in FIG. 1C, when mounted on the bearing unit 100A, a bending angle θ between the annular portion 11A and the elastic portion 13A may be appropriately set according to a length (L) of the elastic portion 13A and the size of the soft conductive member 20 such that the soft conductive member 20 abuts against the side surface 52a of the inner ring 52 of the rolling bearing 50. By the bending angle θ, the biasing force of the soft conductive member 20 to the side surface 52a of the inner ring 52 of the rolling bearing 50 can be adjusted. By decreasing the bending angle θ, the biasing force can be strengthened, and conversely, by increasing the bending angle θ, the biasing force can be weakened.

By adjusting the pressing force of the pressing member 80 against the outer ring 51, the contact area between the soft conductive member 20 of the shaft grounding member 1A and the side surface 52a of the inner ring 52 of the rolling bearing 50 changes. Therefore, by increasing the contact area between the soft conductive member 20 and the side surface 52a of the inner ring 52, it is possible to more effectively prevent electrolytic corrosion of the rolling bearing 50, to reduce electromagnetic noise, and to prevent a temperature rise due to friction.

Second Embodiment: Shaft Grounding Member and Bearing Unit for Outer Ring Rotation

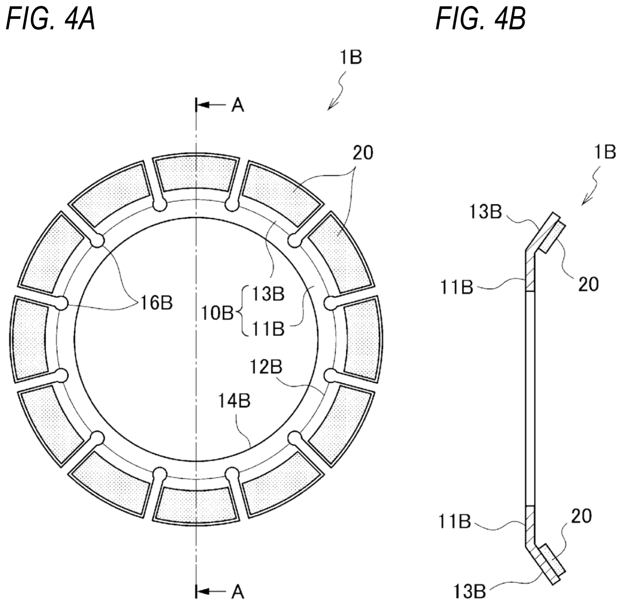

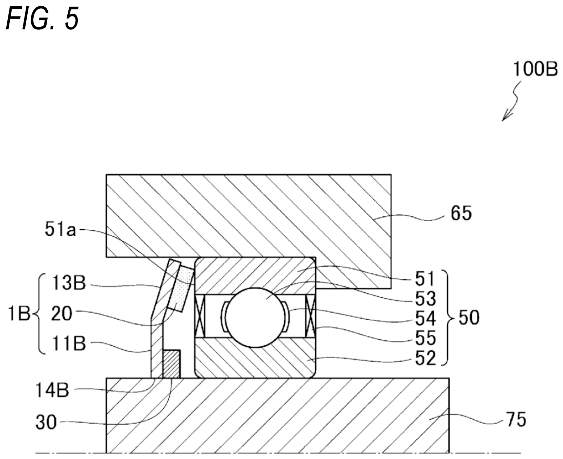

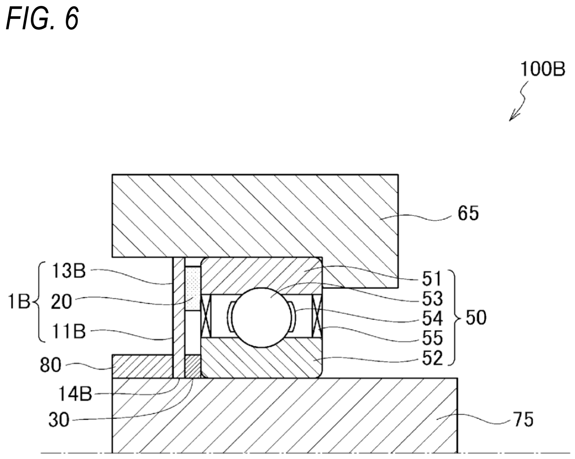

A case in which the inner ring 52 of the rolling bearing 50 is a rotating ring has been described in the first embodiment, and a bearing unit in which the outer ring 51 is a rotating ring will be described in a second embodiment. FIGS. 4A and 4B are views showing a shaft grounding member for outer ring rotation, in which FIG. 4A is a plan view thereof, and FIG. 4B is a cross-sectional view taken along a line A-A in FIG. 4A. FIG. 5 is a cross-sectional view showing a state when the shaft grounding member shown in FIGS. 4A and 4B is attached to the bearing unit. FIG. 6 is a cross-sectional view showing an example of the bearing unit in which the shaft grounding member shown in FIGS. 4A and 4B is assembled.

In the bearing unit according to the second embodiment, the same members as those in the first embodiment are denoted by the same reference signs, and the detailed description thereof will be omitted or simplified.

As shown in FIGS. 4A and 4B, a shaft grounding member 1B for outer ring rotation includes a spring plate 10B including an annular portion 11B and a plurality of elastic portions 13B that are bent at an outer diameter side end portion 12B of the annular portion 11B and that extend continuously from the annular portion 11B toward the outer periphery in the radial direction in a radial shape. As shown in FIG. 5, when the elastic portion 13B is mounted on a bearing unit 100B, the elastic portion 13B is bent toward the right side in the figure in a manner of facing the outer ring 51 of the rolling bearing 50. Arc-shaped notches 16B are formed on both sides of the bent portion of the elastic portion 13B with the annular portion 11B.

The soft conductive member 20 containing a lubricant in advance is mounted on the surface of each elastic portion 13B on the side facing the outer ring 51 of the rolling bearing 50 using an adhesive or the like, and the spring plate 10B and the soft conductive member 20 constitute the shaft grounding member 1B.

As shown in FIGS. 5 and 6, the bearing unit 100B according to the second embodiment includes the rolling bearing 50, and the shaft grounding member 1B shown in FIGS. 4A and 4B is mounted thereon. The inner ring 52 of the rolling bearing 50 is fixed to a fixing member 75, and a rotating member 65 is mounted on the outer ring 51. As shown in FIG. 5, the soft conductive member 20 is mounted on the surface (the right side in the drawing) of the elastic portion 13B facing the outer ring (the rotating ring) 51, and is mounted on the bearing unit 100B in a state in which the surface on the bending side provided with the soft conductive member 20 faces the outer ring 51.

As shown in FIG. 6, the bearing unit 100B is used in a state in which the annular portion 11B of the shaft grounding member 1B is pressed against the side surface of the inner ring 52 by the pressing member 80 with the conductive spacer 30 interposed therebetween. Therefore, the inner diameter side of the inner ring 52 and the inner peripheral end surface of the annular portion 11B in the spring plate 10B is fixed in a state of abutting against the fixing member 75, and the soft conductive member 20 can abut against the side surface of the outer ring 51.

In the second embodiment, a current from a motor (not shown) that drives the rotating member 65 flows through the outer ring 51. Thereafter, the current flows from the soft conductive member 20 to the elastic portion 13B and the annular portion 11B of the spring plate 10B through the outer ring 51, and flows to the grounded fixing member 75 via an inner peripheral end surface 14B of the annular portion 11B, the pressing member 80, the spacer 30, and the inner ring 52. In this way, by grounding the rotating member 65 and the fixing member 75, the inside of the bearing is not energized, and the shaft voltage, which is the potential difference between the rotating member and the fixing member, can be significantly reduced. Therefore, electrolytic corrosion of the rolling bearing 50 can be prevented, and electromagnetic noise can be reduced.

Similarly to the first embodiment, since the biasing force of the spring plate 10B to the side surface of the outer ring 51 of the soft conductive member 20 is not fairly large, and the soft conductive member 20 contains a lubricant, the abrasion powder is less likely to be generated. Further, since the soft conductive member 20 contains a lubricant in advance, it is possible to prevent the temperature rise due to the sliding between the soft conductive member 20 and the outer ring 51.

By adjusting the pressing force of the pressing member 80 against the outer ring 51 and increasing the contact area between the soft conductive member 20 and the side surface 51a of the outer ring 51, electrolytic corrosion of the rolling bearing 50 can be more effectively prevented, and the temperature rise due to friction can be prevented.

In the present embodiment, the annular portion 11B of the shaft grounding member 1B may also directly abut against the side surface of the inner ring 52 without providing the spacer 30.

The inner peripheral end surface 14B of the annular portion 11B and the spacer 30 may abut against the fixing member 75 or may be held between the inner ring 52 and the pressing member 80 without abutting against the fixing member 75.

Third Embodiment: Shaft Grounding Member and Bearing Unit for Inner Ring Rotation

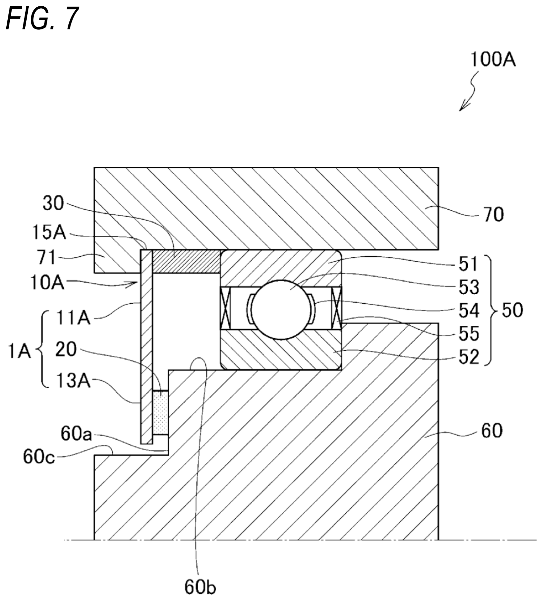

FIG. 7 shows a case in which the shaft grounding member 1A is mounted on a bearing unit whose rotating ring is an inner ring, similarly to the first embodiment. In the bearing unit according to a third embodiment, the same members as those in the first embodiment are denoted by the same reference signs, and the detailed description thereof will be omitted or simplified.

In the third embodiment, the shaft 60, which is a rotating member to which the inner ring 52 is fitted, is formed with a stepped surface 60c having a smaller diameter than a fitting surface 60b to which the inner ring 52 is fitted. The soft conductive member 20 containing a lubricant in advance is mounted on the surface of the elastic portion 13A facing the shaft 60 in the axial direction, specifically, on a side surface 60a between the fitting surface 60b to which the inner ring 52 is fitted and the stepped surface 60c. The shaft grounding member 1A is mounted on the housing 70 by elastically deforming the elastic portion 13A. The annular portion 11A of the spring plate 10A and the spacer 30 are held by the outer ring 51 and a flange portion 71 protruding to the inner diameter side of the housing 70.

As shown in FIG. 7, in such an inner ring rotating type bearing unit 100A, the soft conductive member 20 of the shaft grounding member 1A is mounted on the housing 70 in a manner of abutting against the side surface 60a of the shaft 60. Accordingly, the annular portion 11A of the spring plate 10A is electrically connected to the side surface of the outer ring 51 via the conductive spacer 30, and is also electrically connected to the end surface of the flange portion 71 of the housing 70.

In the bearing unit 100A shown in FIG. 7, the current from the shaft 60 flows from the soft conductive member 20 to the elastic portion 13A and the annular portion 11A of the spring plate 10A through the side surface 60a of the shaft 60. Thereafter, the current flows to the housing 70 via the spacer 30 and the outer ring 51 or to the grounded housing 70 via the outer peripheral end surface 15A of the annular portion 11A. In this way, the shaft 60 which is the rotating member and the housing 70 which is the fixing member are grounded, so that the inside of the bearing is not energized, and the shaft voltage which is the potential difference between the rotating member and the fixing member can be significantly reduced. Therefore, electrolytic corrosion of the rolling bearing 50 can be prevented, and electromagnetic noise can be reduced.

Similarly to the first embodiment, since the biasing force of the spring plate 10A to the side surface of the shaft 60 of the soft conductive member 20 is not fairly large, and the soft conductive member 20 contains a lubricant, the abrasion powder is less likely to be generated. Further, since the soft conductive member 20 contains a lubricant in advance, it is possible to prevent the temperature rise due to the sliding between the soft conductive member 20 and the shaft 60.

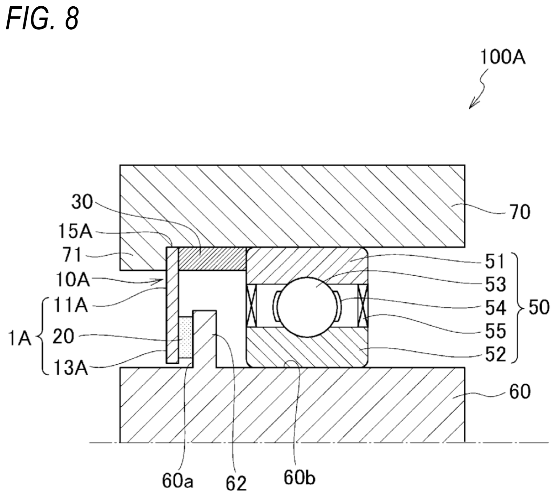

As shown in FIG. 8, in the present embodiment, the shaft 60 may be provided with a flange portion 62 that protrudes from the fitting surface 60b toward the outer diameter side, and the soft conductive member 20 may abut against the side surface 60a of the flange portion 62.

In particular, in the bearing unit 100A shown in FIG. 7, the position where the soft conductive member 20 is in contact with the side surface 60a of the shaft 60 has a smaller diameter than the position where the soft conductive member 20 is in contact with the side surface 52a of the inner ring 52 as shown in FIG. 3. Therefore, the circumferential speed of the side surface 60a of the shaft 60 can be reduced, and the generation of the abrasion powder and drag loss can be further reduced.

In the third embodiment, unlike the first embodiment, the shaft grounding member 1A is not in contact with the side surface 52a of the inner ring 52. Therefore, the design freedom of the rolling bearing, such as the attachment of the snap ring, can be improved.

Fourth Embodiment: Shaft Grounding Member and Bearing Unit for Outer Ring Rotation

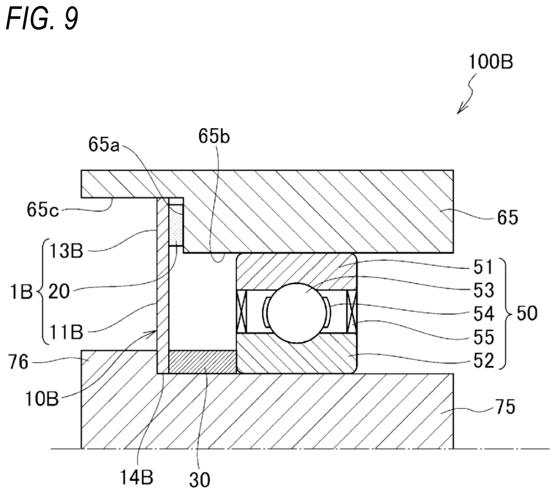

FIG. 9 shows a case in which the shaft grounding member 1B is mounted on a bearing unit whose rotating ring is the outer ring 51, similarly to the second embodiment. In the bearing unit according to a fourth embodiment, the same members as those in the second embodiment are denoted by the same reference signs, and the detailed description thereof will be omitted or simplified.

In the fourth embodiment, the rotating member 65 to which the outer ring 51 is fitted has a stepped surface 65c having a larger diameter than a fitting surface 65b to which the outer ring 51 is fitted. The soft conductive member 20 containing a lubricant in advance is mounted on a surface of the elastic portion 13B facing the rotating member 65 in the axial direction, specifically, a surface facing the side surface 65a between the fitting surface 65b to which the outer ring 51 is fitted and the stepped surface 65c. Therefore, the soft conductive member 20 can abut against the side surface 65a of the rotating member 65.

As shown in FIG. 9, in the outer ring rotating type bearing unit 100B, the soft conductive member 20 of the shaft grounding member 1B is mounted on the fixing member 75 in a manner of abutting against the side surface 65a of the rotating member 65. Accordingly, the annular portion 11B of the spring plate 10B is electrically connected to the side surface of the inner ring 52 via the conductive spacer 30, and is also electrically connected to the end surface of a flange portion 76 of the fixing member 75.

In the bearing unit 100B shown in FIG. 9, the current from a motor (not shown) that drives the rotating member 65 flows from the soft conductive member 20 to the inner peripheral end surface 14B of the annular portion 11B through the side surface 65a of the rotating member 65 via the elastic portion 13B and the annular portion 11B of the spring plate 10B. Thereafter, the current flows to the grounded fixing member 75 via the spacer 30 and the inner ring 52 or directly to the fixing member 75. In this way, by grounding the rotating member 65 and the fixing member 75, the inside of the bearing is not energized, and the shaft voltage, which is the potential difference between the rotating member and the fixing member, can be significantly reduced. Therefore, electrolytic corrosion of the rolling bearing 50 can be prevented, and electromagnetic noise can be reduced.

Similarly to the first embodiment, since the biasing force of the spring plate 10B to the side surface of the rotating member 65 of the soft conductive member 20 is not fairly large, and the soft conductive member 20 contains a lubricant, the abrasion powder is less likely to be generated. Further, since the soft conductive member 20 contains a lubricant in advance, it is possible to prevent the temperature rise due to the sliding between the soft conductive member 20 and the rotating member 65.

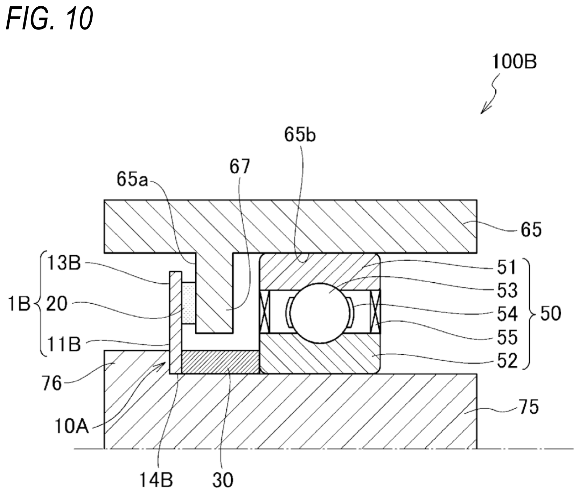

As shown in FIG. 10, in the present embodiment, the rotating member 65 may be provided with a flange portion 67 that protrudes from the fitting surface 65b toward the inner diameter side, and the soft conductive member 20 may abut against the side surface 65a of the flange portion 67.

In particular, in the bearing unit 100B shown in FIG. 10, the position where the soft conductive member 20 is in contact with the side surface 65a of the rotating member 65 has a smaller diameter than the position where the soft conductive member 20 is in contact with the side surface 51a of the outer ring 51 as shown in FIG. 6. Therefore, the circumferential speed of the side surface 65a of the rotating member 65 can be reduced, and the generation of the abrasion powder and drag loss can be further reduced.

In the fourth embodiment, unlike the second embodiment, the shaft grounding member 1B is not in contact with the side surface 51a of the outer ring 51. Therefore, the design freedom of the rolling bearing, such as the attachment of the snap ring, can be improved.

Fifth Embodiment: Shaft Grounding Member and Bearing Unit for Inner Ring Rotation Including One Elastic Portion

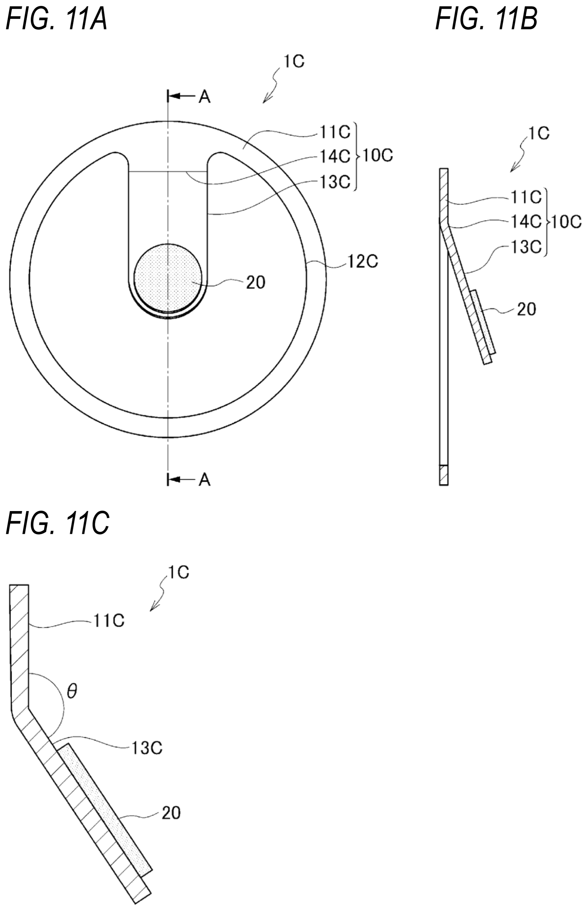

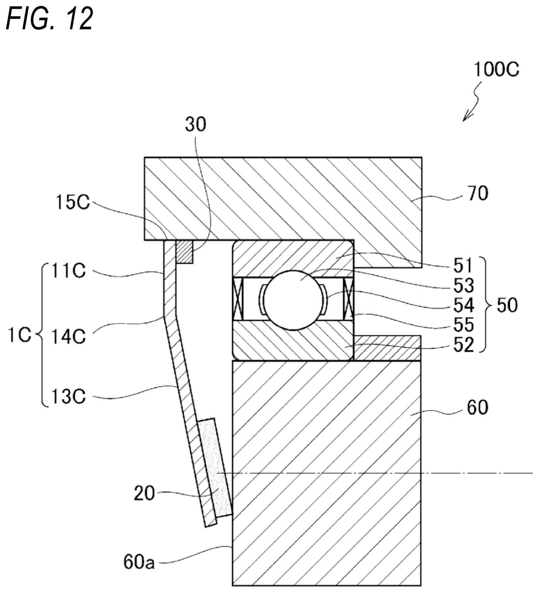

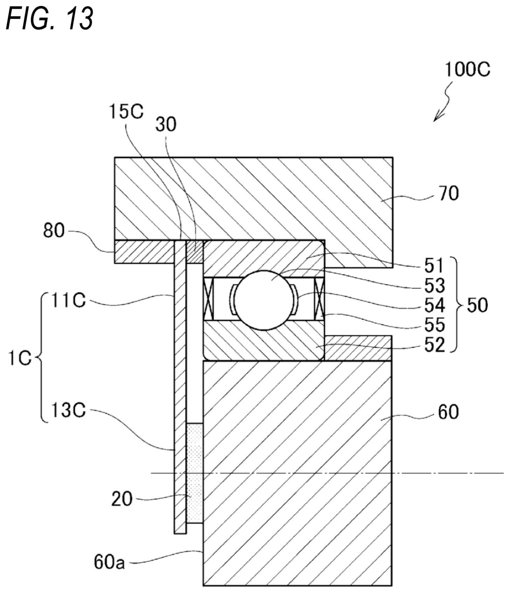

FIGS. 11A to 11C show an example of a shaft grounding member according to a fifth embodiment of the present disclosure, in which FIG. 11A is a plan view thereof, FIG. 11B is a cross-sectional view taken along a line A-A in FIG. 11A, and FIG. 11C is an enlarged view showing a bent portion between an annular portion and an elastic portion in FIG. 11B. FIG. 12 is a cross-sectional view showing a state when the shaft grounding member shown in FIGS. 11A to 11C is attached to the bearing unit. FIG. 13 is a cross-sectional view showing an example of the bearing unit in which the shaft grounding member shown in FIGS. 11A to 11C is assembled.

In the bearing unit according to the fifth embodiment, the same members as those in the first embodiment are denoted by the same reference signs, and the detailed description thereof will be omitted or simplified.

As shown in FIGS. 11A to 11C, the shaft grounding member 1C includes a spring plate 10C including an annular portion 11C and one elastic portion 13C that is bent at an inner peripheral side end portion 12C of the annular portion 11C and that extends continuously from the annular portion 11C toward the center in the radial direction. The elastic portion 13C is bent from an elastic base portion 14C serving as a starting point. The soft conductive member 20 containing a lubricant in advance is mounted on the surface on the bending side of the elastic portion 13C by an adhesive or the like, and the spring plate 10C and the soft conductive member 20 constitute the shaft grounding member 1C.

As shown in FIG. 12, the shaft grounding member 1C is mounted on the bearing unit 100C in a state in which the bending side surface (the right side in the drawing) of the elastic portion 13C faces the side surface 60a side of the shaft 60 fitted into the inner ring 52 of the rolling bearing 50. The side surface 60a side of the shaft 60 refers to a surface orthogonal to the axial direction of the shaft 60.

As shown in FIG. 13, the bearing unit 100C is used in a state in which the annular portion 11C of the shaft grounding member 1C is pressed against the side surface of the outer ring 51 by the pressing member 80 with the spacer 30 interposed therebetween. Therefore, the soft conductive member 20 can abut against the side surface 60a of the shaft 60. Accordingly, the annular portion 11C of the spring plate 10C is electrically connected to the side surface of the outer ring 51 via the conductive spacer 30, and is also electrically connected to the housing 70.

In the fifth embodiment, a current from a motor (not shown) that drives the shaft 60 flows from the soft conductive member 20 to the elastic portion 13C and the annular portion 11C of the spring plate 10C, and flows to the grounded housing 70 via the outer peripheral end surface 15C of the annular portion 11C, the pressing member 80, the spacer 30, and the outer ring 51. In this way, the shaft 60 which is the rotating member and the housing 70 which is the fixing member are grounded, so that the inside of the bearing is not energized, and the shaft voltage which is the potential difference between the rotating member and the fixing member can be significantly reduced. Therefore, electrolytic corrosion of the rolling bearing 50 can be prevented, and electromagnetic noise can be reduced.

Similarly to the first embodiment, since the biasing force of the spring plate 10C to the side surface of the shaft 60 of the soft conductive member 20 is not fairly large, and the soft conductive member 20 contains a lubricant, the abrasion powder is less likely to be generated. Further, since the soft conductive member 20 contains a lubricant in advance, it is possible to prevent the temperature rise due to the sliding between the soft conductive member 20 and the shaft 60.

In the fifth embodiment, the outer peripheral end surface 15C of the annular portion 11C and the spacer 30 abut against the housing 70. Alternatively, the outer peripheral end surface 15C and the spacer 30 may be held between the outer ring 51 and the pressing member 80 without abutting against the housing 70. In this case, the current flowing through the annular portion 11C flows to the housing 70 via the outer ring 51 and the pressing member 80. Since the outer ring 51 has a large contact area with the housing 70, the current flowing through the outer ring 51 does not pass through the rolling element 53 and flows into the housing 70.

In the bearing unit 100C, the soft conductive member 20 abuts against the side surface 60a of the shaft 60, and the peripheral speed is further reduced as compared with a case in which the soft conductive member 20 is in contact with the side surface of the inner ring 52. Therefore, it is possible to further reduce generation of the abrasion powder and drag loss as compared with other embodiments. Since the peripheral speed is lowest near the center of the shaft, it is more preferable that the soft conductive member 20 abuts near the center of the shaft.

The present disclosure is not limited to the above embodiments, and may be modified and improved as appropriate.

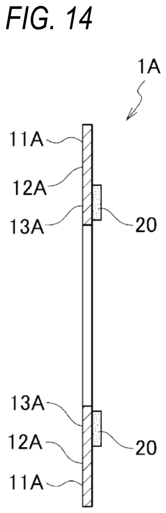

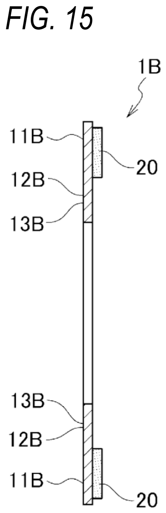

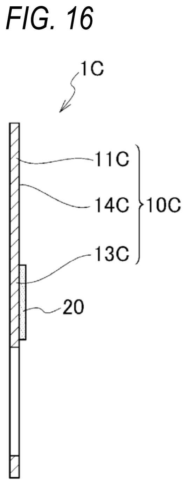

For example, in the above embodiments, the elastic portions 13A, 13B, and 13C of the spring plates 10A, 10B, and 10C are bent toward the rotating ring. Alternatively, the elastic portions 13A, 13B, and 13C may also be formed flush with the annular portions 11A, 11B, and 11C without being bent at the inner diameter side end portion 12A, the outer diameter side end portion 12B, and the elastic base portion 14C. For example, in the case of the shaft grounding member 1A for inner ring rotation shown in FIGS. 1A to 1C, as shown in FIG. 14, the annular portion 11A and the elastic portion 13A may be linearly continuous in the cross-sectional view. For example, in the case of the shaft grounding member 1B for outer ring rotation shown in FIGS. 4A and 4B, as shown in FIG. 15, the annular portion 11B and the elastic portion 13B may be linearly continuous in the cross-sectional view. Further, for example, in the case of the shaft grounding member 1C shown in FIGS. 11A to 11C, as shown in FIG. 16, the annular portion 11C and the elastic portion 13C may be linearly continuous in the cross-sectional view.

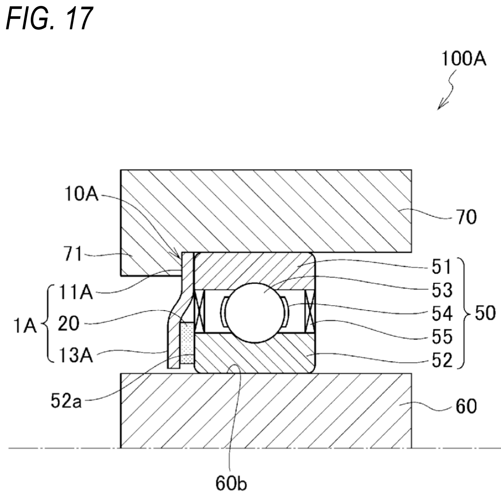

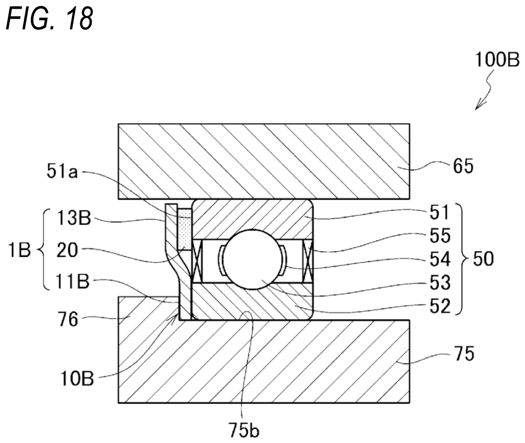

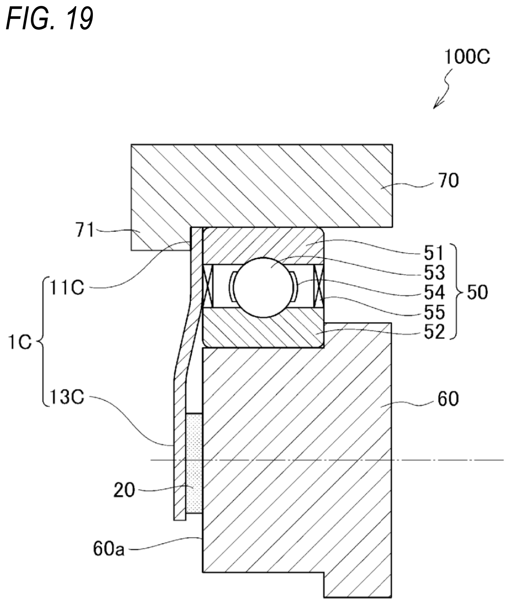

Therefore, in the bearing units 100A and 100C shown in FIGS. 17 and 19, when the annular portion 11A of the shaft grounding member 1A and the annular portion 11C of the shaft grounding member 1C are held between the flange portion 71 of the housing 70 and the side surface of the outer ring 51, the elastic portion 13A of the shaft grounding member 1A and the elastic portion 13C of the shaft grounding member 1C are elastically deformed by an amount equal to the thickness of the soft conductive member 20, and the soft conductive member 20 abuts against the side surface 52a of the inner ring 52 and the side surface 60a of the shaft 60 by the bending reaction force of the spring plates 10A and 10C. In the bearing unit 100B shown in FIG. 18, when the annular portion 11B of the shaft grounding member 1B is held between the flange portion 76 of the fixing member 75 and the side surface of the inner ring 52, the elastic portion 13B of the shaft grounding member 1B is elastically deformed by an amount equal to the thickness of the soft conductive member 20, and the soft conductive member 20 abuts against the side surface 51a of the outer ring 51 by the bending reaction force of the spring plate 10B. Accordingly, the same function as that of the above embodiment can be achieved.

In this case, since bending of the spring plates 10A, 10B, and 10C is not required, the shaft grounding members 1A, 1B, and 1C can be manufactured at low cost, and the spring plates 10A, 10B, and 10C and the soft conductive member 20 can be bonded together easily.

In common to all the embodiments, the planar shape of the soft conductive member 20 is not limited. In addition to the fan shape shown in FIG. 1A, a rectangle may be used. A plurality of small pieces may be used.

The shaft grounding member according to the present disclosure can also be suitably used in the case of achieving only one of prevention of electrolytic corrosion and prevention of generation of electromagnetic noise. Example

Hereinafter, in order to check the effect of the present disclosure, a rolling bearing unit having substantially the same configuration as that of the first embodiment was incorporated into a measurement device and tested. A test was performed using the shaft grounding member for a rolling bearing according to the invention example in which the soft conductive member was impregnated with a lubricant in advance and a shaft grounding member for a rolling bearing according to a comparative example in which a soft conductive member did not contain a lubricant. In the invention example, the soft conductive member coated with transmission oil was used as the lubricant.

Measurement Device

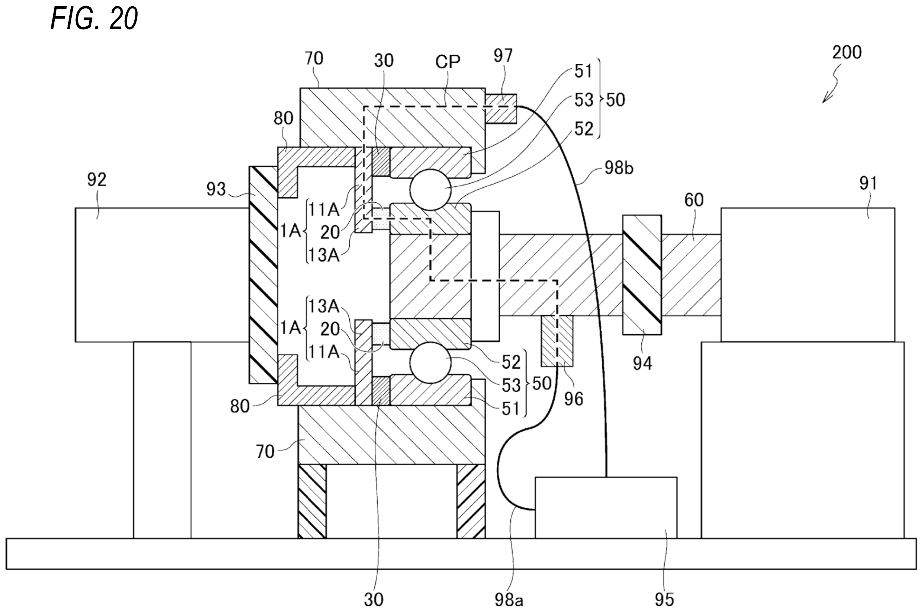

With reference to FIG. 20, a configuration of a measurement device 200 used for evaluating the conductivity of the shaft grounding member and measuring the temperature of the soft conductive member 20 will be described.

In the measurement device 200, the inner ring (the rotating ring) 52 of the rolling bearing 50 is fitted to the shaft (the rotating member) 60 connected to a motor 91. Since the configuration of the rolling bearing 50 is the same as the configuration of the inner ring rotation shown in FIG. 3 described in the first embodiment, the same components as those shown in FIG. 3 are denoted by the same reference signs in FIG. 20. The outer ring (the fixed ring) 51 of the rolling bearing 50 is fixed to the inner diameter side of the housing (the fixing member) 70.

The shaft grounding member 1A and the spacer 30 are sandwiched between the rolling bearing 50 and the pressing member 80. By applying a load to the pressing member 80 in the direction of the shaft grounding member 1A by a piston 93 mounted on a cylinder 92, the shaft grounding member 1A and the spacer 30 are fixed.

An insulating coupling 94 is mounted on the shaft 60, the piston 93 and a part of the housing 70 are made of an insulating material, and the rolling element 53 made of an insulator is provided between the inner ring 52 and the outer ring 51 of the bearing 50. In this way, in order to evaluate the conductivity of the shaft grounding member 1A, the conductive paths other than the shaft grounding member 1A are cut off. The bearing sealed with a seal member (not shown) was filled with grease as an in-bearing lubricant, and the soft conductive member 20 was used in a dry environment in which no lubricant such as oil flows.

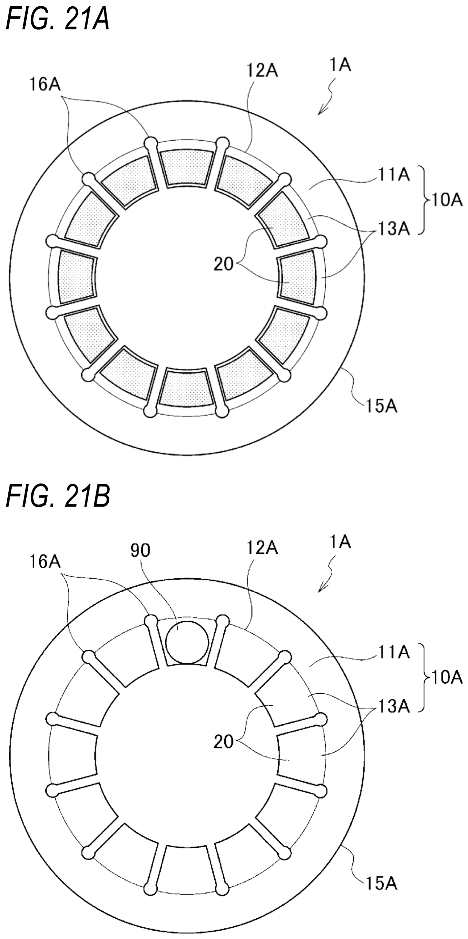

The shaft grounding member 1A shown in FIG. 21 was used for measuring the temperature. In the shaft grounding member 1A, a temperature indicating tape 90 used for temperature measurement was attached to the surface of the elastic portion 13A opposite to the surface on which the soft conductive member 20 was mounted. As the temperature indicating tape 90, a tape that irreversibly changes color according to a change in temperature of the attachment surface was used. Accordingly, the temperature of the shaft grounding member was measured only by visual checking.

Evaluation of Conductivity

A method for evaluating the conductivity using a commercially available LCR meter 95 will be described below. One conductive cable 98a of the LCR meter 95 was connected to a commercially available conductive brush 96 that comes into contact with the shaft 60. The other conductive cable 98b of the LCR meter 95 was connected to a terminal 97 in contact with the housing 70. Accordingly, as indicated by a broken line in FIG. 20, a conductive path CP is formed continuously from the conductive brush 96 serving as an inlet to the terminal 97 serving as an outlet via the shaft 60, the inner ring 52, the soft conductive member 20 made of a porous body, the spring plate 10A, and the housing 70. Then, by measuring the resistance value between the conductive brush 96 and the terminal 97 with an LCR meter, whether sufficient conductivity can be maintained as the shaft grounding member 1A was evaluated.

In this measurement, the conditions were that the diameter of the shaft 60 was 30 mm, the rotation speed was 3500 rpm, the inner diameter of the housing 70 was 62 mm, the LCR meter was an AC constant-current power supply, and the current value was 30 mA.

The measurement results of the temperature and the resistance value of the shaft grounding member 1A are shown in Table 1 below. In Table 1, the resistance value according to the comparative example is 1.0, and the resistance value according to the invention example is shown as a relative value.

[Table 1]

|  | Invention example | Comparative example |
|---|---|---|
| Resistance value | 2.4 | 1.0 |
| Temperature [°C] | 80 | 130 |

As shown in above Table 1, in the invention example, the lubricant was contained in the soft conductive member 20 made of the porous body. Accordingly, a lubricating film was formed on the side surface of the inner ring (the rotating ring) 52 abutting against the soft conductive member 20, and the temperature rise during sliding was prevented, so that the temperature described above was 80°C. The resistance value according to the inventive example was 2.4 when the resistance value according to the comparative example was 1.0.

Evaluation of Measurement Results

As the evaluation criteria for the measurement results, when the resistance value according to the comparative example was set to 1.0, a shaft grounding member having a resistance value of less than 10.0 and a temperature of less than 100°C was determined to have good mechanical properties.

When the resistance value of the shaft grounding member is significantly lower than the resistance value of the rolling bearing, since the current flowing from the motor 91 flows from the inner ring (the rotating ring) 52 of the rolling bearing 50 to the shaft grounding member 1A, it is possible to prevent electrolytic corrosion of the rolling bearing 50 and to prevent the generation of electromagnetic noise. Since the resistance value of the rolling bearing is approximately 1000 when the resistance value according to the comparative example is 1.0, the resistance value of the shaft grounding member can be determined to be a significantly low value when the resistance value is less than 10.0.

Since the soft conductive member 20 used in the present disclosure may partially contain an organic material, thermal deterioration is an important factor in determining the durability thereof. The relationship between durability (life) and temperature can often be expressed by Arrhenius's law represented by the following equation (1).

$$\ln[\text{life}] - [\text{constant}] + [\text{activation energy}]/[\text{gas constant}]/[\text{temperature}] \ldots \text{Equation (1)}$$

The activation energy of the thermal degradation reaction of the organic material at approximately 100°C is approximately 10 kcal to 30 kcal. Therefore, when the activation energy is assumed to be 10 kcal and the life of the soft porous body is calculated using the Arrhenius equation described above, the life is 5.9 times longer when the temperature is 80°C than when the temperature is 130°C.

Therefore, when the temperature of the soft conductive member is less than 100°C, it can be determined that the life of the shaft grounding member is sufficient and a bearing unit having excellent durability is obtained.

From the above, it was shown that, since the measurement results of the temperature and the resistance value in the invention example all satisfy the evaluation criteria, it is possible to prevent the electromagnetic noise while maintaining sufficient conductivity as the shaft grounding member, and to improve the durability by reducing the increase in the sliding temperature.

## Claims

1.  A shaft grounding member for a rolling bearing, the shaft grounding member being mounted on a rolling bearing unit including the rolling bearing in which one bearing ring is a fixed ring and the other bearing ring is a rotating ring, the shaft grounding member comprising:

    a spring plate including an annular portion and at least one elastic portion that extends continuously from the annular portion in a radial direction, the spring plate being made of a thin plate of a conductive material; and
    a soft conductive member mounted on a surface of the elastic portion that faces the rotating ring or a rotating member to which the rotating ring is fitted,
    wherein the soft conductive member contains a lubricant in advance, and is capable of abutting against at least a part of a surface of the rotating ring or at least a part of a surface of the rotating member.

2.  The shaft grounding member for a rolling bearing according to claim 1,
    wherein the shaft grounding member is used in a dry environment, and the lubricant is non-volatile.

3.  The shaft grounding member for a rolling bearing according to claim 1,
    wherein the soft conductive member is made of at least one selected from a resin-impregnated non-woven fabric, a non-woven fabric, a resin-impregnated woven fabric, a woven fabric, a resin-impregnated soft porous body, and a soft porous body.

4.  The shaft grounding member for a rolling bearing according to claim 1,

    wherein the spring plate includes the annular portion and a plurality of the elastic portions extending continuously from the annular portion in a radial shape,
    wherein the soft conductive member is mounted on a surface of the elastic portion facing the rotating ring, and
    wherein the soft conductive member is capable of abutting against a side surface of the rotating ring.

5.  The shaft grounding member for a rolling bearing according to claim 1,

    wherein the spring plate includes the annular portion and a plurality of the elastic portions extending in a radial shape continuously from the annular portion,
    wherein the soft conductive member is mounted on a surface of the elastic portion facing the rotating member, and
    wherein the soft conductive member is capable of abutting against a side surface of the rotating member.

6.  The shaft grounding member for a rolling bearing according to claim 1,
    wherein the annular portion is pressed against a side surface of the fixed ring with a spacer interposed therebetween.

7.  The shaft grounding member for a rolling bearing according to claim 1,

wherein the spring plate includes the annular portion and a plurality of the elastic portions extending in a radial shape continuously from the annular portion, and
wherein the plurality of elastic portions are bent toward the rotating ring.

8. The shaft grounding member for a rolling bearing according to claim 1,

wherein the spring plate includes the annular portion and a plurality of the elastic portions extending in a radial shape continuously from the annular portion, and
wherein the plurality of elastic portions are formed flush with the annular portion.

9. A rolling bearing unit comprising:

a rolling bearing in which one bearing ring is a fixed ring and the other bearing ring is a rotating ring; and
the shaft grounding member for a rolling bearing according to any one of claims 1 to 8.

10. The shaft grounding member for a rolling bearing according to claim 1,

wherein the rolling bearing is of an inner ring rotating type in which the fixed ring is an outer ring fixed to a housing and the rotating ring is an inner ring into which a shaft directly connected to a motor is fitted,
wherein the spring plate includes the annular portion and the elastic portion extending continuously from an inner peripheral side end portion of the annular portion to a center of the annular portion,
wherein the soft conductive member is mounted on a surface of the elastic portion on a side facing the rolling bearing, and
wherein the soft conductive member is capable of abutting against a side surface of the shaft.

11. The shaft grounding member for a rolling bearing according to claim 10,
wherein the annular portion is pressed against a side surface of the outer ring with a spacer interposed therebetween.

12. The shaft grounding member for a rolling bearing according to claim 10,
wherein the elastic portion of the spring plate is bent toward the side surface of the shaft.

13. The shaft grounding member for a rolling bearing according to claim 10,
wherein the elastic portion of the spring plate is formed flush with the annular portion.

14. A rolling bearing unit comprising:

an inner ring rotating type rolling bearing in which an outer ring is fixed to a housing and in which a shaft directly connected to a motor is fitted to an inner ring; and
the shaft grounding member for a rolling bearing according to any one of claims 10 to 13.

FIG. 1A

FIG. 1B

FIG. 1C

FIG. 2

FIG. 3

FIG. 4A

FIG. 4B

FIG. 5

FIG. 6

FIG. 7

FIG. 8

FIG. 9

FIG. 10

FIG. 11A

FIG. 11B

1C

A

11C
14C } 10C
13C

20

12C

A

FIG. 11C

1C

11C

θ

13C

20

FIG. 12

FIG. 13

FIG. 14

FIG. 15

## FIG. 16

FIG. 17

100A

10A

70

71

11A
1A  20
13A

51
53
54
55
52

50

52a

60

60b

FIG. 18

FIG. 19

EP 4 782 710 A1

**FIG. 20**

## FIG. 21A

## FIG. 21B

Europäisches
Patentamt

European
Patent Office

Office européen
des brevets

**EUROPEAN SEARCH REPORT**

**Application Number**

**EP 26 15 2547**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2015 223509 A1 (SCHAEFFLER TECHNOLOGIES AG [DE]) 2 March 2017 (2017-03-02) | 1-7, 9-12,14 | INV.<br>F16C19/02<br>F16C41/00 |
| Y | * paragraph [0006] - paragraph [0038]; figure 1 *<br>* paragraph [0013] - paragraph [0014] *<br>* paragraph [0024] - paragraph [0032] *<br>----- | 8,13 | F16C19/06<br>F16C19/52<br>H01R4/48<br>H01R39/12<br>H02K11/40 |
| E | EP 4 715 231 A1 (NSK WARNER KK [JP]) 25 March 2026 (2026-03-25) * the whole document *<br>----- | 1-14 | |
| E | EP 4 715 232 A1 (NSK WARNER KK [JP]) 25 March 2026 (2026-03-25) * the whole document *<br>----- | 1-3,6, 9-14 | |
| Y | WO 2019/001864 A1 (BOSCH GMBH ROBERT [DE]) 3 January 2019 (2019-01-03) * figure 5 * * page 18, line 25 - page 21, line 28 *<br>----- | 8,13 | |

**TECHNICAL FIELDS SEARCHED (IPC)**

F16C
H01R
H02K

The present search report has been drawn up for all claims

| Place of search | Date of completion of the search | Examiner |
|---|---|---|
| The Hague | 8 June 2026 | Cerva-Pédrin, Sonia |

EPO FORM 1503 03.82 (P04C01)

## ANNEX TO THE EUROPEAN SEARCH REPORT
## ON EUROPEAN PATENT APPLICATION NO.

EP 26 15 2547

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2026

| Patent document cited in search report | Publication date | Patent family member(s) | Publication date |
|---|---|---|---|
| DE 102015223509 A1 | 02-03-2017 | NONE | |
| EP 4715231 A1 | 25-03-2026 | CN 121719841 A | 24-03-2026 |
| | | EP 4715231 A1 | 25-03-2026 |
| | | KR 20260043582 A | 31-03-2026 |
| | | US 20260085728 A1 | 26-03-2026 |
| EP 4715232 A1 | 25-03-2026 | CN 121739017 A | 27-03-2026 |
| | | EP 4715232 A1 | 25-03-2026 |
| | | KR 20260043583 A | 31-03-2026 |
| | | US 20260085727 A1 | 26-03-2026 |
| WO 2019001864 A1 | 03-01-2019 | DE 102017210860 A1 | 03-01-2019 |
| | | WO 2019001864 A1 | 03-01-2019 |

EPO FORM P0459

For more details about this annex : see Official Journal of the European Patent Office, No. 12/82

**REFERENCES CITED IN THE DESCRIPTION**

**Patent documents cited in the description**

- JP 2011135720 A
- JP 2011135722 A
- JP 2020127257 A
- JP 2002146568 A
- JP H048820 U
- JP 2017060401 A
- JP 2024130948 A
- JP 2023018214 A
- JP 2022139252 A
- JP 2000244180 A